# EUROPEAN PATENT SPECIFICATION

(11) **EP 3 074 650 B1**
(45) Date of publication and mention of the grant of the patent: **12.02.2020**
(21) Application number: 14866025.1
(22) Date of filing: 26.11.2014
(51) Int. Cl.: F16C 33/12, F04B 39/00, F04C 29/00, C10M 129/78, C10L 1/14, C10M 105/42, F01D 25/18, F16C 33/10, F25B 31/00, F01D 25/16, F16C 33/20

(54) **IMPROVED BEARING PERFORMANCE FOR COMPRESSORS USING HIGH ENERGY REFRIGERANTS WITH SULFUR-BASED OIL ADDITIVES**
VERBESSERTE LAGERLEISTUNG FÜR KOMPRESSOREN MIT HOCHENERGETISCHEN KÄLTEMITTELN MIT SCHWEFELBASIERTEN ÖLADDITIVEN
AMÉLIORATIONS DES PERFORMANCES DE PALIERS POUR COMPRESSEURS EMPLOYANT DES AGENTS DE REFROIDISSEMENT À HAUTE ÉNERGIE AVEC DES ADDITIFS D'HUILE À BASE DE SOUFRE

(30) Priority: 27.11.2013 US 201361909501 P; 24.11.2014 US 201414551814
(43) Date of publication of application: 05.10.2016
(73) Proprietor: Emerson Climate Technologies, Inc., Sidney, OH 45365 (US)
(72) Inventor: SCANCARELLO, Marc J., Troy, Ohio 45373 (US)
(74) Representative: J A Kemp LLP
(86) International application number: PCT/US2014/067710
(87) International publication number: WO 2015/081258

(56) References cited:
- WO-A1-98/10039
- WO-A1-98/23444
- US-A1- 2009 110 581
- US-A1- 2010 190 667
- US-A1- 2011 052 439
- US-A1- 2013 098 101
- US-A1- 2013 139 390

## Description

### CROSS-REFERENCE TO RELATED APPLICATIONS

This application claims priority to U.S. Utility Application No. 14/551,814, filed on November 24, 2014 and also claims the benefit of U.S. Provisional Application No. 61/909,501, filed on November 27, 2013.

### FIELD

The present disclosure relates to improved bearing performance in compressor machines by use of sulfur-based oil additives, especially for those that use high energy refrigerants.

### BACKGROUND

This section provides background information related to the present disclosure which is not necessarily prior art.

Various refrigerants have been utilized in refrigeration systems that include a compressor machine, such as a scroll compressor or a reciprocating compressor. Certain halogenated hydrocarbons were widely used as refrigerants; however, many such refrigerants have high global warming potential (a relative measure of how much heat a greenhouse gas traps in the atmosphere). Thus any leaking from refrigeration systems using such high global warming potential refrigerants could be environmentally detrimental. Therefore, in recent years there has been significant interest in developing compressors and refrigeration systems that use refrigerants having low global warming potential. Development of compressor designs that use natural or more environmentally-friendly refrigerants has been ongoing. One such refrigerant is carbon dioxide (CO₂ or R-744), which has a desirably low global warming potential of 1. Another is propane (C₃H₈ or R-290) having a global warming potential of less than about 4. Many of such low global warming potential refrigerants are considered to be high energy refrigerants, as they result in high temperature and/or high pressure operating envelopes during compression cycles.

Moreover, prevalent conventional refrigerants that contain halogens, particularly chlorides, tend to provide greater lubricity between parts within a compressor. However, in the case of many high energy refrigerants that have low global warming potentials, such benefits are absent. Furthermore, while lead (Pb) is a particularly efficacious lubricant for bearings, tightening environmental regulations have restricted use of lead, further compounding the lubrication issues attendant with use of high energy refrigerants.

Unlike other lubricated industrial applications, in heating, ventilation, air conditioning, and refrigeration (HVACR) applications, the lubricating oil frequently cannot be changed during a life of a compressor machine. When refrigerant flows through the system and mixes with the lubrication oil, it acts as a viscosity reducing agent. This renders the lubricant oil less effective and creates conditions more susceptible to high friction resulting in power losses and ultimately component seizure. Thus, the recent introduction of high energy refrigerants to assist the reduction of global warming has exacerbated this situation because of the higher temperatures involved with these refrigerants. Higher temperatures cause many potential problems in an HVACR system, including further viscosity reduction of the lubricant oil, thermal expansion of mating surfaces, and overall distress and wear to the bearings within the compressor.

There is therefore a need for compressors that use high energy refrigerants, which have greater wear resistance and durability, thus improving bearing performance within the compressor machine.

Prior art document US 2009/110581 A1 discloses a scroll compressor machine.

### SUMMARY

This section provides a general summary of the disclosure, and is not a comprehensive disclosure of its full scope or all of its features.

In various aspects, the present disclosure contemplates methods for improving bearing performance for a compressor machine. In certain aspects, the method may comprise providing or incorporating a bearing into a compressor machine that is substantially free of lead (Pb). The bearing includes a material comprising copper *(e.g.,* a copper alloy). The bearing also comprises at least one lubricant particle selected from a group consisting of: molybdenum disulfide (MoS₂), tungsten disulfide (WS₂), zinc sulfide (ZnS), hexagonal boron nitride, polytetrafluoroethylene (PTFE), calcium fluoride (CaF₂), carbon fiber, graphite, graphene, carbon nanotubes, carbon particles, thermoset polyimide, and combinations thereof. The compressor machine processes a working fluid comprising a refrigerant and a lubricant oil comprising a sulfur-based additive. In certain variations, the refrigerant is a high energy refrigerant. In other variations, the compressor machine has a high-side pressure design. The sulfur-based additive is capable of reacting with the copper in the material included in the bearing to enhance lubricity and improve performance of the bearing in the compressor machine.

In other aspects, the present disclosure provides a compressor machine having improved wear resistance. The compressor machine may comprise a compression mechanism configured for processing a working fluid comprising a refrigerant and a lubricant oil comprising a sulfur-based additive. In certain variations, the refrigerant is a high energy refrigerant. In other variations, the compressor machine may have a high-side pressure design. The compressor machine further comprises a bearing that comprises a material comprising copper (*e.g.,* a copper alloy) and at least one lubricant particle selected from a group consisting of: molybdenum disulfide (MoS₂), zinc sulfide (ZnS), tungsten disulfide (WS₂), hexagonal boron nitride, polytetrafluoroethylene (PTFE), calcium fluoride (CaF₂), carbon fiber, carbon particles, graphite, graphene, carbon nanotubes, thermoset polyimide, and combinations thereof. The bearing is substantially free of lead. Thus, copper in bearing material is capable of reacting with the sulfur-based additive to improve lubricity of the bearing.

In yet other aspects, the present disclosure contemplates a method for improving bearing performance for a compressor machine. In certain aspects, the method may comprise providing or incorporating a bearing into a compressor machine. The bearing may be substantially free of lead (*e.g.,* a lead-free bearing) and comprises a material comprising copper (*e.g.,* a copper alloy). In certain aspects, the bearing may also comprise molybdenum disulfide (MoS₂). The compressor machine processes a working fluid comprising a refrigerant and a lubricant oil comprising a sulfur-based additive comprising 2,5-dimercapto-1,3,4-thiadiazole or a derivative thereof. In certain variations, the refrigerant is a high energy refrigerant. In other variations, the compressor machine may have a high-side pressure design. The sulfur-based additive reacts with the copper in the bearing to enhance lubricity and improve performance of the lead-free bearing in the compressor machine.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 shows a schematic illustration of an exemplary sleeve bearing suitable for use in compressors.
Figures 2A-2C show images of a conventional sleeve bearing having a steel backing layer, a porous sintered bronze (*e.g.,* a copper alloy) intermediate layer, and a sliding composite material layer comprising polytetrafluoroethylene resin with a plurality of lead lubricant particles dispersed therein. Figure 2B is a magnified image of the detailed region indicated in Figure 2A (at 25 times magnification). Figure 2C is a magnified image taken from a detailed region indicated in Figure 2B (at 350 times magnification).
Figure 3 is a chart showing dynamic viscosity behavior at different temperatures for a polyol ester oil lubricant composition for use in an exemplary compressor machine.

Corresponding reference numerals indicate corresponding parts throughout the several views of the drawings.

### DETAILED DESCRIPTION

Example embodiments will now be described more fully with reference to the accompanying drawings.

Such example embodiments are provided so that this disclosure will be thorough, and will fully convey the scope to those who are skilled in the art. Numerous specific details are set forth such as examples of specific compositions, components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (*e.g.*, "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Throughout this disclosure, the numerical values represent approximate measures or limits to ranges to encompass minor deviations from the given values and embodiments having about the value mentioned as well as those having exactly the value mentioned. Other than in the working examples provided at the end of the detailed description, all numerical values of parameters (*e.g.*, of quantities or conditions) in this specification, including the appended claims, are to be understood as being modified in all instances by the term "about" whether or not "about" actually appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters.

In addition, disclosure of ranges includes disclosure of all values and further divided ranges within the entire range, including endpoints and sub-ranges given for the ranges.

The present disclosure generally pertains to compression-type heat transfer devices. Non-limiting examples of compression-type heat transfer devices are compressor machines or compressor systems for refrigerators, heat pumps, and air conditioning equipment, including auto, home, commercial, and industrial air conditioners. In these systems, a refrigerant is circulated. The refrigerant typically evaporates at a lower pressure withdrawing heat from the surrounding zone. The resulting vapor is then compressed in a compressor machine having a compression mechanism and passed to a condenser where is condenses and gives off heat to a second zone. The condensate is then returned through an expansion valve to the evaporator, so completing the cycle. The mechanical energy required for compressing the vapor and pumping the fluid in the compression mechanism of the compressor is provided by, for example, an electric motor or internal combustion engine.

Types of compressors useful for the above applications can be classified into two broad categories, both positive displacement and dynamic compressors. Positive displacement compressors increase refrigerant vapor pressure by reducing the volume of the compression chamber through work applied to the compressor's mechanism. Positive displacement compressors include many styles of compressors currently in use, such as reciprocating, rotary (rolling piston, rotary vane, single screw, twin screw), and orbital (scroll or trochoidal). Dynamic compressors increase refrigerant vapor pressure by continuous transfer of kinetic energy to the vapor in a compression mechanism in the form of a rotating member, followed by conversion of this energy into a pressure rise. Centrifugal compressors function based on these principles. Details of the design and function of these compressors for refrigeration applications can be found in the 2010 ASHRAE Handbook, HVAC systems and Equipment, Chapter 37, incorporated herein by reference.

In various aspects, the present disclosure pertains to compressor machines used in a wide variety of refrigeration and heat energy transfer applications, in some cases, to industrial or commercial air-conditioning or refrigeration units, *e.g.,* for factories, office buildings, apartment buildings, warehouses, and ice skating rinks, or for retail sale.

Such compressors have bearings that generally serve the purpose of reducing friction at interfacing wear surfaces, while supporting radial and axial loads. In compressors, as well as in other equipment, a cylindrical sleeve-type bearing is commonly used and typically includes an outer metal sleeve or backer having a porous metal layer adjacent to the sleeve with a polymer disposed therein to form the wear surface. In the heating, ventilation, air conditioning, and refrigeration (HVACR) industry, bearings using lead (Pb) as a lubricant material have been traditionally used in compressor machines. For many applications, lead can serve as one of the most effective and high performing solid lubricants available. For example, a common bearing used as a journal bearing in compressors has a steel sleeve/backer with a porous bronze layer having a well-dispersed PTFE resin, and also having lead particles dispersed in the resin (*e.g.,* through use of a solvent based slurry). However, in the context of the present technology, it has been discovered that when using high energy refrigerants or in high temperature systems, lead bearings can fail to consistently provide adequate long-term lubrication in a compressor device within a compressor machine in a refrigeration system.

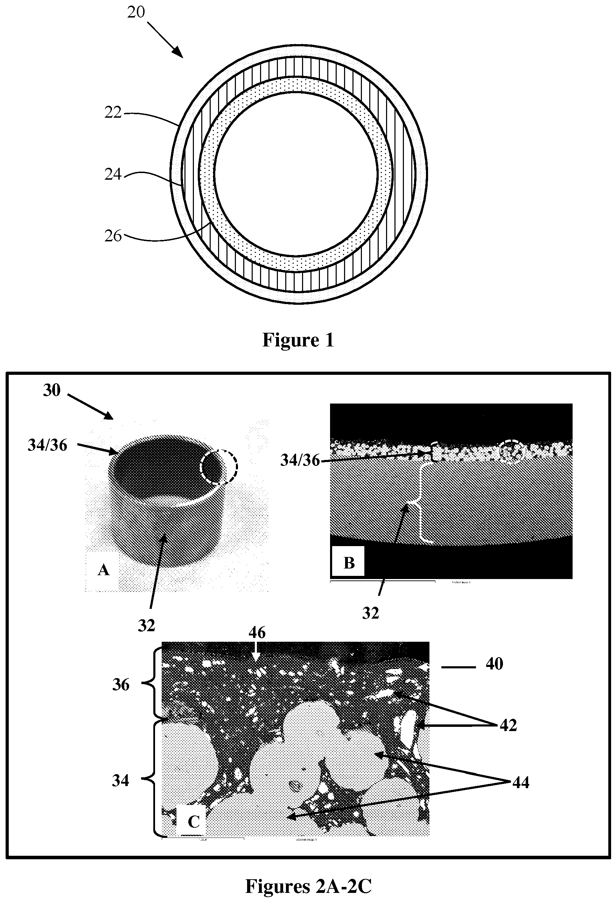

Figure 1 shows a schematic of an exemplary self-lubricating sleeve journal bearing 20 typically used in compressor machines, such as a scroll compressor. The sleeve bearing 20 has a sleeve backing 22. The sleeve backing 22 is often formed of steel in a tubular form (which may be formed by joining a steel sheet at a seam or by extruding or otherwise forming a tubular steel structure). In typical sleeve bearing designs, an intermediate layer 24 is disposed over the sleeve backing 22. Such an intermediate layer 24 may comprise a sintered porous material. The bearing may comprise a material comprising copper (*e.g.,* a copper alloy). In certain variations, the intermediate layer 24 may comprise a porous sintered metal material comprising copper or a copper alloy, such as a porous sintered bronze material. Bronze is typically an alloy of copper (Cu) and tin (Sn). Over the intermediate layer 24 is disposed a sliding material 26. The sliding material 26 forms a sliding surface against which a surface of a moving component (such as a shaft, not shown) interfaces. The sliding material 26 may be a polymeric composite that infiltrates or impregnates the open pores of the intermediate layer 24. Thus, the intermediate layer 24 and sliding layer 26 may not form clearly delineated layers, but rather may be somewhat combined or mixed together. The sliding material 26 can include a resin matrix having one or more lubricating particles dispersed therein to provide lubrication and anti-wear properties to the sleeve bearing 20.

Figures 2A-2C show images of a conventional sleeve bearing 30 for use in a compressor machine within a refrigeration system. The sleeve bearing 30 has a steel sleeve backing 32. Disposed over the sleeve backing 32 is an intermediate layer 34 comprising a sintered porous bronze material, comprising a copper and tin alloy. A sliding layer composite material 36 is disposed over the intermediate layer 34. The sliding layer composite material 36 comprises a polytetrafluoroethylene (PTFE) resin matrix 40 (dark gray or black material) having a plurality of lubricating lead particles 42 (small white particles) dispersed therein to provide lubrication and anti-wear properties to the sleeve bearing 30. As best seen in Figures 2B and 2C, the sliding layer composite material 36 infiltrates or impregnates the open pores of the sintered porous bronze material 44 (light gray material) in the intermediate layer 34. Thus, an exposed wear surface 46 is defined by the sliding layer composite material 36 prior to use in a compressor.

The sintered porous bronze material substructure within the intermediate layer 34 helps supports load and receives the PTFE resin matrix 40. In certain variations, the lubricity of bearing 30 is supplied mainly by the PTFE resin matrix 40 and the lead particles 42 in the initial stages of bearing wear, but then as the sintered porous bronze material of intermediate layer 34 becomes exposed, the sintered porous bronze material assumes a greater responsibility to maintain lubricity. By itself, the sintered porous bronze material tends to be not nearly as lubricious as pure lead and PTFE. In certain other variations, an inner section or diameter of the bearing 30 may be machined prior to introducing it into a compressor, for example, to provide greater dimensional accuracy. Such a machining process may remove portions of the sliding layer composite material 36 and thus expose portions of the intermediate layer 34 (*e.g.,* to expose sintered porous bronze material) prior to incorporation into a new compressor. In such variations, the machined bearing 30 may have portions of the resin layer (*e.g.,* the PTFE resin matrix 40) that have been removed. Under such operating conditions with a machined bearing, it can be particularly advantageous to use the concepts of the present teachings to improve long term bearing performance.

In various aspects, the present disclosure pertains to a compressor machine that uses a working fluid comprising both a refrigerant and a lubricating oil. Although the present technology can be used with any refrigerants, it is particularly useful for compressors that use a refrigerant that includes one or more high energy refrigerants. Such systems often have relatively high temperatures and therefore greater kinetic energy, which increases reactivity and wear, while reducing durability. Thus, in certain aspects, the present disclosure pertains to a compressor machine that uses a working fluid comprising both a high energy refrigerant and a lubricating oil.

Furthermore, in compressor machines that employ high energy refrigerants or otherwise experience particularly high temperature conditions (for example, in a high-side pressure compressor), it has surprisingly been found that bearings having materials comprising lead (Pb) can fail to consistently provide adequate long-term lubrication with certain lubricant oils in a compressor machine in a refrigeration system. For example, when certain high energy refrigerants are used, such as difluoroethane (HFC-32 or R32), there are often significantly higher heats of compression and therefore system temperatures, which can reduce lubricity and exacerbate wear issues. For purposes of illustration, Table 1 includes a comparison of some common exemplary and non-limiting examples of refrigerants and their comparative discharge line temperatures and relative heats of compression. Discharge line temperatures (DLT) are a practical measure of compressor refrigerant temperature (in this case shown for typical Air Conditioning High Compression Ratio conditions which are: -20°F saturated evaporator temperature, 105°F saturated condenser temperatures and 0°F suction gas temperature). These DLT temperatures are based on theoretical 100% isentropic compression efficiency. Some common non-limiting refrigerants (having both high global warming potential and low global warming potential) are included. All values are calculated using NIST REFPROP Ver. 9.0. Notably, many lower heats of compression fluids have high global warming potential values associated with them.

| **TABLE 1** | | | | |
|---|---|---|---|---|
| ***REFRIGERANT** | **NOMINAL COMPOSITION (MASS PERCENT)** | ****DISCHARGE LINE TEMPERATURE (°F) 20/105/0 HCR CONDITIONS** | **GLOBAL WARMING POTENTIAL (IPCC AR4, 100 yr., CO₂=1)** | **RELATIVE HEAT OF COMPRESSION (I, II, III), WHERE I IS HIGHER AND III IS LOWER)** |
| R1234yf | Single component | 119 | 4 | III |
| R600, butane | Single component, A3 flammability | 123 | 4 | III |
| 1234ze(E) | Single component | 125 | 6 | III |
| R125 | Single component | 129 | 3500 | III |
| R404A | R125/R143a/R134a (44/52/4) | 139 | 3922 | II |
| R290, Propane | Single component, A3 flammability | 144 | 3 | II |
| R134a | Single component | 145 | 1430 | II |
| R407C | R32/R125/R134a (23/25/52) | 169 | 1774 | II |
| R152a | Single component | 175 | 124 | II |
| HFO Blend 1 | R32/R1234ze(E)/R 1234yf/R152a (40/30/20/10) | 181 | 285 | I |
| R410A | R32/R125 (50/50) | 188 | 2088 | I |
| R22 | Single component | 194 | 1810 | I |
| HFO Blend 2 | R32/R1234yf (72.5/27.5) | 208 | 490 | I |
| HFO Blend 3 | R32/1234ze(E) (73/27) | 216 | 494 | I |
| R32 | Single component | 246 | 675 | I |
| R717, Ammonia | Single component | 353 | 0 | I |

| | | | | |
|---|---|---|---|---|
| *Nomenclature based on ASHKAE 34 Standard except for the "HFO Blend" designation. **HCR conditions defined at: -20°F saturated evaporator temperature, 105°F saturated condenser temperatures and 0°F suction gas temperature). DLT temperatures are based on theoretical 100% isentropic compression efficiency. | | | | |

As shown in Table 1, a relative heat of compression of I is comparatively large and can be considered to be a high energy refrigerant, a II rating is intermediate, while a relative heat of compression of III is considered to be a low and thus not typically, a high energy refrigerant. While categorization of a high energy refrigerant can be subjective and may vary, in certain aspects, high energy refrigerants in accordance with the present disclosure may be considered to include a refrigerant selected from the group consisting of: saturated hydrofluorocarbons, difluoromethane (HFC-32), difluoroethane (HFC-152a), fluoroethane (HFC-161), HFC-410A (a near-azeotropic mixture of difluoromethane (HFC-32) and pentafluoroethane (HFC-125)), chlorodifluoromethane (HCFC-22), dimethyl ether, carbon dioxide (R-744), ammonia (R-717), bis(trifluoromethyl)sulfide, and trifluoroiodomethane and combinations thereof. As can be seen from the representative refrigerants in Table 1, those categorized as having a relative heat of compression in the I category are higher energy refrigerants. Thus, in certain variations, the high energy refrigerant may include hydrofluoroolefin (HFO) Blend 1 (a mixture of about 40 mass % difluoromethane (HFC-32), 30 mass % 1,2,3,3,-tetrafluoropropene (HFO-1234ze), 20 mass % 3,3,3,-trifluoropropene (HFO-1234zf), and 10 mass % difluoroethane (HFC-152a)), HFC-410A (a near-azeotropic mixture of about 50% by mass difluoromethane (HFC-32) and 50% by mass pentafluoroethane (HFC-125)), chlorodifluoromethane (HCFC-22), hydrofluoroolefin (HFO) Blend 2 (a mixture of about 72.5 mass % difluoromethane (HFC-32) and 27.5 mass % 3,3,3,-trifluoropropene (HFO-1234zf)), hydrofluoroolefin (HFO) Blend 3 (a mixture of about 73 mass % difluoromethane (HFC-32) and about 27 mass % 1,2,3,3,-tetrafluoropropene (HFO-1234ze)), ammonia (R-717), and combinations thereof. In certain variations, the refrigerant comprises at least one high energy refrigerant, which may be combined with other high energy refrigerants or other (*e.g.,* lower energy) refrigerants. The present teachings are particularly efficacious in a system that uses a high energy refrigerant comprising difluoromethane (HFC-32), ammonia (R-717), carbon dioxide (R-744), and combinations thereof.

Thus, a refrigerant may include the high energy refrigerants discussed above blended with other refrigerants and/or may be independently selected from the following refrigerants. In addition to those specific refrigerants discussed above, nonlimiting examples of categories of refrigerants that may be used include hydrocarbons, chlorofluorocarbons, hydrochlorofluorocarbons, fluorocarbons, hydrofluorocarbons, and hydrofluoroolefins. Particular, nonlimiting examples of useful refrigerants include C₃-C₈ hydrocarbons (including propane (R-290 or HC-290), butane (HC-600), isobutene (HC-600a), 2-methylbutane, pentane (HC-601), and n-pentane), trichlorofluoromethane (CFC-11), dichlorodifluoromethane (CFC-12), pentafluoroethane (HFC-125), 1,1,2,2-tetrafluoroethane (HFC-134), 1,1,1,2-tetrafluoroethane (HFC-134a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245fa), 1,1,1,3,3-pentafluorobutane (HFC-365mfc), HFC-404a (a mixture of about 44 mass % pentafluoroethane (HFC-125), 52 mass % 1,1,1-trifluoroethane (HFC-143a), 4 mass % 1,1,1,2-tetrafluoroethane (HFC-134a)), HFC-407c (a mixture of about 23 mass % difluoromethane (HFC-32), 25 mass % pentafluoroethane (HFC-125), and 52 mass % 1,1,1,2-tetrafluoroethane (HFC-134a)), and the like.

HFO refrigerants include C₂ to C₈ fluoroalkenes, especially straight-chain or branched ethylenes having 1 to 3 fluorine atoms, propenes having 1 to 5 fluorine atoms, butenes having 1 to 7 fluorine atoms, pentenes having 1 to 9 fluorine atoms, hexenes having 1 to 11 fluorine atoms, cyclobutenes having 1 to 5 fluorine atoms, cyclopentenes having 1 to 7 fluorine atoms, and cyclohexenes having 1 to 9 fluorine atoms. Nonlimiting suitable examples of specific refrigerants of this kind include 3,3,3,-trifluoropropene (HFO-1234zf), HFO-1234 refrigerants like 2,3,3,3,-tetrafluoropropene (HFO-1234yf), 1,2,3,3,-tetrafluoropropene (HFO-1234ze), cis- and trans-1,3,3,3,-tetrafluoropropene (HFO-1234ye), pentafluoropropenes (HFO-1225) such as 1,1,3,3,3, pentafluoropropene (HFO-1225zc) or those having a hydrogen on the terminal unsaturated carbon such as 1,2,3,3,3, pentafluoropropene (HFO-1225yez), fluorochloropropenes such as trifluoro,monochloropropenes (HFO-1233) like CF₃CCl=CH₂ (HFO-1233xf) and CF₃CH=CHCl (HFO-1233zd), many of which are described in Smutny, U.S. Patent No. 4,788,352, and Singh et al., U.S. Patent No. 8,444,874, the disclosures of both documents being incorporated herein by reference. The refrigerants may be used in combination, including combinations of fluoroalkene refrigerants with saturated hydrofluorocarbons, C₃-C₈ hydrocarbon, dimethyl ether, carbon dioxide, bis(trifluoromethyl) sulfide, and trifluoroiodomethane refrigerants. For example, in certain aspects, the refrigerant may comprise a high energy refrigerant like difluoromethane (R32) combined with HFO refrigerants. As discussed above, suitable exemplary HFO refrigerants include 1,1,1,2-tetrafluoropropene (HFO-1234yf), both cis- and trans-1,1,1,3-tetrafluoropropene (HFO-1234ze), 1,1,1,trifluoro-2, chloro-propene (HFCO-1233xf), and both cis- and trans-1,1,1-trifluoro-3,chloropropene (HFCO-1233zd), by way of nonlimiting example.

A single refrigerant or a mixture of refrigerants may be used. In particular embodiments, the refrigerant may be a single compound or it may be a mixture of compounds. The mixture may be an azeotrope, zeotrope, or close boiling point mixture.

In accordance with the present technology, it has been discovered that the combination of a refrigerant, especially certain high energy refrigerants, with certain lubricant oil compositions provides an unexpected benefit for specific bearing materials. As discussed above, a lubricant oil composition may be combined with a refrigerant to form a lubricant-refrigerant combination or "working fluid" for a heat transfer device, such as a compressor machine in a refrigeration system. Working refrigeration fluids generally include a minor amount of the lubricant composition. Thus, the lubricant and refrigerant are combined in amounts so that there is relatively more refrigerant than lubricant in the lubricant-refrigerant compositions. Based on the combined weight of lubricant and refrigerant, the refrigerant is greater than or equal to about 50% by weight and the lubricant is less than or equal to about 50% by weight of the combined weight. In various embodiments, the lubricant oil is greater than or equal to about 1 to less than or equal to about 30% by weight of the combined weight of lubricant and high energy refrigerant of from greater than or equal to about 5 to less than or equal to about 20% by weight of the combined weight of the working fluid. Typically, the working fluids include between greater than or equal to about 5 to less than or equal to about 20 weight % or optionally greater than or equal to about 5 to less than or equal to about 15 weight % of lubricant with a balance being the refrigerant. The lubricant composition may be adjusted for optimum compatibility with the refrigerant with which it will be used in a refrigeration compressor or heat transfer device.

In various embodiments, the lubricant and refrigerant combinations discussed above may be used as working fluids in refrigeration systems, including in automotive air conditioners, domestic or industrial refrigerators, freezers, and air conditioners, heat pumps, vending machines, showcases, and water supplying systems. Also disclosed are stationary and mobile refrigeration and air conditioning equipment, including such automotive air conditioners, domestic or industrial refrigerators, freezers, and air conditioners, heat pumps, vending machines, showcases, and water supplying systems containing the disclosed refrigerant/lubricant combinations, and methods of operating such equipment that include the disclosed high energy refrigerant/lubricant combinations.

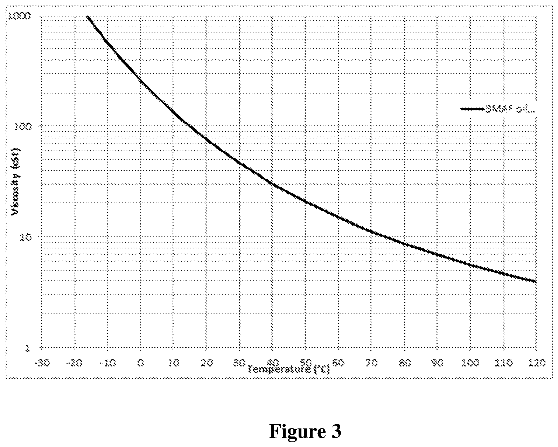

With higher heat of compression requirements (based on enthalpy required), higher temperatures and pressures are typically employed with high energy refrigerants. Similarly, components within compressor machines having a high-side pressure design often experience particularly high temperatures. As discussed above, higher temperatures have the potential to cause problems in HVACR systems, for example, higher energy is available for more reactivity of various compositions within the system, viscosity reduction of the lubricant oil occurs, thermal expansion of mating surfaces, softening and/or degradation of polymeric materials and overall mechanical stress to the bearings and wear surfaces within the compressor machine may occur. By way of example, Figure 3 shows dynamic viscosity behavior at different temperatures for a polyol ester oil composition for use in a HVACR compressor machine. The polyol ester (POE) oil is designated 3MAF and is a reaction product of polyols (pentaerythritol (nominally about 78% to 91%) and dipentaerythritol (nominally about 9% to 22%)) with carboxylic acids (valeric acid nominally at 29% to 34%, heptanoic acid nominally at 34% to 44%, and 3,5,5-trimethyl hexanoic acid nominally at 22% to 37%). As can be seen in Figure 3, a rapid drop-off in viscosity occurs with increasing temperature. Moreover, using high energy refrigerants means attaining higher heat of compression that results in higher operating temperatures, necessarily reducing viscosity. Many HVACR applications suffer from the fact that the oil cannot be changed during the life of the compressor machine, for example, the compressor may be hermetically sealed. Further, the refrigerant that flows through the system acts as a viscosity reducing agent. This renders the lubricant less effective and a condition that is more susceptible to cause high friction resulting in power losses and ultimately component seizure.

In accordance with certain aspects of the present technology, it has been discovered that introducing a sulfur-based additive into a lubricant oil composition serves to enhance lubricity for certain select bearing materials, such as for non-ferrous metal materials comprising copper (Cu), including copper alloys (particularly bronze comprising copper and tin). However, it has further been discovered that such an advantage does not occur to the same extent when the bearing includes a material that comprises lead (Pb). While not limiting the present teaching to any particular theory, it appears that the presence of lead (Pb) in the bearing actually interferes with and may inactivate the sulfur-based additive in the lubricant oil, thus minimizing or preventing enhancement of lubricity that otherwise can occur via interaction of the sulfur-based additive with copper in a material (*e.g.*, copper alloy material), for example, by an apparent passivation process. This may be because sulfur has a higher chemical attraction to lead as compared to non-ferrous/copper or copper alloy materials within the bearing. Also, there appears to be a doubly harmful effect, because when the sulfur from the additive reacts with lead, a lead-sulfur compound appears to subsequently form that is a less effective lubricant than the pure solid lead that was originally present in the bearing before any reaction. Therefore, adding the sulfur-based additive to a lubricating oil when lead is present in a bearing material has been discovered to result in a higher friction conditions and thus diminished bearing performance. This issue can become even more significant at the high operating temperatures and pressures of a bearing in a compressor that is configured to process a high energy refrigerant. At such high temperatures, kinetics can play a major role in promoting reaction of the sulfur-based additive with lead at higher rates.

As further background, when a sulfur-based non-ferrous metal passivation oil additive is used in conjunction with a bearing in a compressor, it is believed that the sulfur tends to react first with the lead to form a lead sulfide, such as PbS. The thermodynamic properties shown in Table 2 show comparative heats of formation for reaction of lead and copper with sulfur.

| **Table 2** | | | |
|---|---|---|---|
| **Sulfur Compound** | **Heat of Formation (Kcal/g-mole)** | **Free Energy of Formation (Kcal/g-mole)** | **Reaction Equilibrium Constant, Log₁₀ K_{f}, Unitless)** |
| PbS (Lead Sulfide) | -22.54 | -22.15 | 16.24 |
| CuS (Copper Sulfide) | -11.6 | -11.7 | 8.58 |
| Cu₂S (Copper Sulfide) | -19.0 | -20.6 | 15.1 |

As can be seen, the more negative heat of formation values associated with the lead sulfide (PbS) compound indicates that it is the more thermodynamically favorable compound to form. Therefore, consumption of the pure lead by reaction with the sulfur additive not only prevents pure lead from serving its primary purpose (as a solid lubricating agent), but also retards the additive from favorably interacting (passivating) with the copper containing material, which has been surprisingly discovered to improve lubricity. This unwanted reaction of the sulfur-based additive with lead is augmented by the higher temperatures of the high energy refrigerants, because of the attendant higher rates of reaction.

By selectively removing lead from a bearing and replacing it with at least one lubricant compound that is relatively stable or inert with respect to sulfur (meaning it will not react as readily as lead with the sulfur-based additive or react preferentially over copper with the sulfur-based additive), the oil additive desirably reacts with and passivates the copper containing material (*e.g.*, bronze) to form copper sulfides. In a lead-free environment, the sulfur-based additive for the lubricant can thus have an unimpeded opportunity to react with the copper in the bearing to create a more lubricious condition that improves bearing performance.

Copper sulfides provide particular added lubricity and wear resistance to a bearing or other wear surface. According to certain aspects of the present invention, the formation of copper sulfides in a bearing material comprising copper improves lubricity as compared to the same bearing material comprising copper (*e.g.,* a copper alloy) in the absence of such a sulfur-based lubricant. Moreover, in accordance with the present technology, there are several advantageous lubricating effects, not only in the formation of lubricious copper sulfides, but also because the new stable or inert solid lubricant species replacing lead remains chemically unchanged (as it does not readily react with sulfur) to further improve lubricity due to its own intrinsic lubricity remaining intact.

In certain aspects, the disclosure thus provides a compressor machine having improved wear resistance. The compressor may comprise a compression mechanism configured for processing a working fluid comprising a high energy refrigerant and a lubricant oil comprising a sulfur-based additive. Exemplary compressors include scroll, rotary vane, centrifugal, single screw, twin screw, reciprocating, and the like. Various compressor components can experience harsh conditions during compressor operation, as many are continually subjected to refrigerant materials and oils, high temperatures, corrosive environments, and high physical stresses, particularly torsional stress. As noted above, compressors having a high-side pressure design experience high pressure and temperature conditions, because many of the compressor components are contained within chambers that are exposed to discharge gas conditions. The compressor comprises at least one wear surface including a material that comprises copper (Cu). The wear surface can be any wear surface comprising copper, which can optionally be a machined surface comprising copper or a surface coated with a material comprising copper.

In certain variations, the present disclosure provides an improved wear surface or improved bearing performance for compressor components where the wear surface comprises a material comprising copper (Cu). Thus, while the present disclosure describes bearings, including an exemplary plain journal or sleeve-type bearing or bushing, in other aspects, any wear surface comprising copper can be improved in accordance with the present technology, especially where lead is absent from the compressor. Thus, all potential bearing surfaces or wear surfaces in a compressor comprising copper are contemplated as being surfaces that can have improved performance in the presence of the sulfur-based oil additive according to the principles present disclosure.

In certain variations, a metal component comprising copper is contemplated for use in a scroll compressor. The metal component has a wear surface comprising copper that may be selected from the group consisting of: a face seal, a drive flat on a crankshaft, a main journal bearing on a crankshaft, a lower journal bearing on a crankshaft, a slider block, a drive flat on a bushing, an outer diameter of a bushing, an Oldham coupling, an upper seal plate of a seal assembly, a thrust plate, an orbiting scroll, a non-orbiting scroll, a thrust bearing surface on a main bearing housing, a lower bearing plate assembly, an Oldham sliding area on a main bearing housing, and the like, as well as any combinations thereof.

In other variations, a metal component comprising copper is contemplated for use in a rotary compressor. The metal component has a wear surface comprising copper that may be selected from the group consisting of: an inner wear surface of a rotor, an outer wear surface of a rotor, a wear surface of a rotor cylinder, a wear surface of a vane, an upper journal bearing housing, a lower journal bearing housing, an upper wear surface on a shaft, a middle wear surface on a shaft, a lower wear surface on a shaft, and the like, as well as any combinations thereof.

All potential bearing surfaces or wear surfaces in a compressor (that may comprise copper) are contemplated in accordance with the present disclosure. Such wear surfaces and bearings are more fully described in U.S. Pub. No. 2014/0023540 (U.S. App. Serial No. 13/948,458 filed on July 23, 2013) entitled "ANTI-WEAR COATINGS FOR SCROLL COMPRESSOR WEAR SURFACES" to Heidecker et al. and U.S. Pub. No. 2014/0024563 (U.S. App. Serial No. 13/948,653 also filed on July 23, 2013) entitled "ANTI-WEAR COATINGS FOR COMPRESSOR WEAR SURFACES" to Heidecker et al., both of which are expressly incorporated herein by reference in their respective entireties. Thus, the ensuing discussion regarding advantages regarding performance of bearings in compressors also may apply to various wear surfaces in the compressor, where such a wear surface comprises copper.

Thus, in certain variations, the disclosure contemplates a compressor machine having improved wear resistance, where the compressor may comprise a compression mechanism configured for processing a working fluid comprising a refrigerant and a lubricant oil comprising a sulfur-based additive. In certain variations, the refrigerant is a high energy refrigerant. In other variations, the compressor machine may have a high-side pressure design. In certain aspects, the compressor also comprises a bearing comprising copper and at least one lubricant particle selected from a group consisting of: molybdenum disulfide (MoS₂), zinc sulfide (ZnS), tungsten disulfide (WS₂), hexagonal boron nitride, polytetrafluoroethylene (PTFE), calcium fluoride (CaF₂), carbon fiber, carbon particles, graphite, graphene, carbon nanotubes, thermoset polyimide, and combinations thereof. Further, the bearing is substantially free of lead, so that the copper is capable of reacting with the sulfur-based additive to improve lubricity of the bearing.

Accordingly, in certain aspects, the present technology provides an unexpected benefit that certain sulfur-based additives included in a lubricant oil composition (processed within a compressor as part of a working fluid) serves to passivate copper containing bearing materials (*e.g.*, to passivate copper in an underlayer of bronze in a sleeve bearing) in the presence of high energy refrigerants. By selecting bearing materials that are "substantially free of' lead, it means that lead is absent in the bearing material to the extent that that undesirable and/or detrimental effects attendant with its presence are avoided (such as reaction with a sulfur-based additive in a lubricant oil). In certain embodiments, a bearing or other material that is "substantially free" of lead comprises less than or equal to about 1% by weight of lead in the bearing, more preferably less than or equal to about 0.75% by weight, optionally less than or equal to about 0.5% by weight, optionally less than or equal to about 0.25% by weight, optionally less than or equal to about 0.1% by weight, optionally less than or equal to about 0.05% and in certain embodiments is free from any lead and therefore comprises 0% by weight lead.

In certain variations, a suitable stable or inert solid lubricant particle is molybdenum disulfide (MoS₂). As noted above, a further added benefit of using a solid lubricant that is chemically inert or stable to the sulfur-based additive (used as a replacement for lead in the bearing) is that it will remain intact and not react with the sulfur-based oil additive; hence the solid lubricant can fully serve its intended lubrication purpose. Although in certain variations, MoS₂ is a particularly suitable inert solid lubricant for use as a bearing material in combination with other aspects of the present teachings, other inert or stable particles may be selected for use in a bearing material. Such a lubricating inert or stable particle may be selected from a group consisting of: tungsten disulfide (WS₂), zinc sulfide (ZnS), hexagonal boron nitride, polytetrafluoroethylene (PTFE), calcium fluoride (CaF₂), carbon fiber, carbon particles, graphite, graphene, carbon nanotubes, thermoset polyimide, and combinations thereof. In certain aspects, at least one particle is selected from a group consisting of: molybdenum disulfide (MoS₂), tungsten disulfide (WS₂), zinc sulfide (ZnS), hexagonal boron nitride, carbon fiber, carbon particles, graphite, graphene, and combinations thereof.

In various aspects, the present disclosure also provides methods for improving bearing performance for a compressor machine. In certain aspects, the method may comprise providing or incorporating a bearing into a compressor machine. The bearing comprises copper and at least one lubricant particle. At least one lubricant is selected from a group consisting of: molybdenum disulfide (MoS₂), tungsten disulfide (WS₂), zinc sulfide (ZnS), hexagonal boron nitride, polytetrafluoroethylene (PTFE), calcium fluoride (CaF₂), carbon fiber, graphite, graphene, carbon nanotubes, carbon particles, thermoset polyimide, and combinations thereof. Furthermore, the bearing is selected to be substantially free of lead. The compressor machine processes a working fluid comprising a refrigerant and a lubricant oil comprising a sulfur-based additive in the compressor machine. In certain variations, the refrigerant is a high energy refrigerant. In other variations, the compressor machine may have a high-side pressure design.

In certain variations, the bearing may be a lead-free self-lubricating bearing. In certain aspects, a particularly suitable self-lubricating bearing material includes a steel backing layer that is overlaid with a sliding layer or alternatively a bronze backing layer overlaid with a sliding layer.

Such a bearing may comprise a steel backing layer overlaid with a sintered porous bronze material. The porous bronze material comprises copper and tin. In certain variations, the porous bronze metal material optionally comprises greater than or equal to about 75% by weight to less than or equal to about 95% by weight copper and greater than or equal to about 5% by weight to less than or equal to about 25% by weight tin.

Such a sintered porous bronze metal material layer is optionally impregnated with a resin that is stable upon exposure to high energy refrigerants, such as a fluoropolymer. Thus, the bearing further comprises a sliding composite material having the resin and optionally at least one lubricant particle type. The polymer resin which impregnates the pores of the sintered bronze material thus forms a sliding layer. In other particularly suitable variations, the porous bronze metal material comprises greater than or equal to about 88% by weight to less than or equal to about 90% by weight copper and greater than or equal to about 10% by weight to less than or equal to about 12% by weight tin. In one suitable variation, the sliding composite material may comprise a polytetrafluoroethylene (PTFE) resin having molybdenum disulfide (MoS₂) distributed therein. Such a bearing is commercially available as DP10™ from GGB, L.L.C.

Other suitable bearings of these types are described in U.S. Patent Nos. 6,425,977 to McDonald et al., 5,911,514 to Davies et al., and 6,461,679 to McMeekin et al., the relevant portions of each of these being incorporated by reference herein. Table 3 below sets forth various suitable commercially available self-lubricating bearing materials for use in the compressor machines of the present disclosure, by way of non-limiting example.

| **Table 3** | | |
|---|---|---|
| **Bearing** | **Manufacturer** | **Bearing Materials** |
| DP4™ | GGB, L.L.C. | A lead-free self-lubricating layered sleeve bearing having: |
| | | 1) a steel backing layer; |
| | | 2) a porous bronze intermediate layer; |
| | | 3) a sliding layer composite filling pores of the porous bronze layer that has a polytetrafluoroethylene (PTFE) resin with alkali earth metals (CaF₂) and polymer fillers (aramid fibers). |
| DP31™ | GGB, L.L.C. | A lead-free self-lubricating layered sleeve bearing having: |
| | | 1) a steel backing layer; |
| | | 2) a porous bronze intermediate layer; |
| | | 3) a sliding layer composite filling pores of the porous bronze layer that has a polytetrafluoroethylene (PTFE) resin filled with calcium fluoride (CaF₂), fluoropolymer, and other fillers. |
| DP10™ | GGB, L.L.C. | A lead-free self-lubricating layered sleeve bearing having: |
| | | 1) a steel backing layer; |
| | | 2) a porous bronze intermediate layer (Cu at 89% and Sn at 11%); |
| | | 3) a sliding layer composite filling pores of the porous bronze layer that has a polytetrafluoroethylene (PTFE) resin filled with molybdenum sulfide (MoS₂). |
| P141 | Schaeffler KG (INA Brand) | A lead-free self-lubricating layered sleeve bearing having: |
| | | 1) a steel backing layer; |
| | | 2) a porous bronze intermediate layer; and |
| | | 3) a sliding layer composite filling pores of the porous bronze intermediate layer comprising: |
| | | i) Polytetrafluoroethylene (PTFE) resin at 75 vol. % |
| | | ii) Perfluoroalkoxy at 5 vol. %; |
| | | iii) ZnS particles at 17 vol. %; and |
| | | iv) Carbon fibers at 3 vol. %. |
| P14 | Schaeffler KG (INA Brand) | A lead-free self-lubricating layered sleeve bearing having: |
| | | 1) a steel backing layer; |
| | | 2) a porous bronze intermediate layer; and |
| | | 3) a sliding layer that has a resin filling pores of the porous bronze layer comprising: |
| | | i) Polytetrafluoroethylene (PTFE) resin at 75 vol. %; |
| | | ii) Perfluoroalkoxy at 5 vol. %; and |
| | | iii) ZnS particles at 25 vol. %. |

Thus, in accordance with certain methods of the present disclosure, a sulfur-based additive is introduced to an oil lubricant composition. The sulfur-based additive reacts with the copper in the bearing to enhance lubricity and improve performance of the bearing in the compressor machine. The sulfur-based oil additive helps increase lubricity during later stages of bearing wear, for example, where an underlying intermediate bearing material comprising copper becomes more exposed at the exposed wear surface. In other variations, the sulfur-based oil additive aids in increasing lubricity at initial stages of bearing use in a compressor, for example, in situations where the bearing is machined for dimensional accuracy and the copper alloy can become exposed and thus is available for reaction with the sulfur-based oil additive when first used in the compressor.

The lubricant oil may thus comprise a sulfur-based oil additive selected from the group consisting of: diaryl sulfides, arylalkyl sulfides, dialkyl sulfides, diaryl disulfides, arylalkyl disulfides, dialkyl disulfides, diaryl polysulfides, arylalkyl polysulfides, dialkyl polysulfides, dithiocarbamates, derivatives of 2-mercaptobenzothiazole, derivatives of 2,5-dimercapto-1,3,4-thiadiazole, and combinations thereof. In certain variations, a suitable sulfur-based non-ferrous metal passivation oil additive comprises a thiadiazole monomer derivative. In other variations, a suitable sulfur-based oil additive comprises heteroaromatic bis-alkyldisulfide. In certain variations, the sulfur-based additive comprises 2,5-dimercapto-1,3,4-thiadiazole or derivative thereof. For example, in certain variations a particularly suitable sulfur-based oil additive comprises 2,5-bis(n-octyldithio)-1,3,4-thiadiazole. In certain variations, the sulfur-base oil additive may comprise 2,5-bis(n-octyldithio)-1,3,4-thiadiazole and dioctyl disulfide. For example, such a sulfur-based oil additive is commercially available from Vanderbilt Comp. as CUVAN® 826 and comprises 2,5-bis(n-octyldithio)-1,3,4-thiadiazole and dioctyl disulfide. CUVAN® 826 is believed to contain about 60-80% 2,5-bis(n-octyldithio)-1,3,4-thiadiazole and 20-40% dioctyl disulfide.

As noted above, while the working fluid may comprise any refrigerant, in certain aspects, the working fluid comprises a high energy refrigerant. Suitable high energy refrigerants may be selected from a group consisting of: saturated hydrofluorocarbons, difluoromethane (HFC-32), difluoroethane (HFC-152a), fluoroethane (HFC-161), HFC-410A (a mixture of difluoromethane (HFC-32) and pentafluoroethane (HFC-125)), chlorodifluoromethane (HCFC-22), hydrofluoroolefin (HFO) Blend 1 (a mixture of difluoromethane (HFC-32), 1,2,3,3,-tetrafluoropropene (HFO-1234ze), 3,3,3,-trifluoropropene (HFO-1234zf), and difluoroethane (HFC-152a)), hydrofluoroolefin (HFO) Blend 2 (a mixture of difluoromethane (HFC-32) and 3,3,3,-trifluoropropene (HFO-1234zf)), hydrofluoroolefin (HFO) Blend 3 (a mixture of difluoromethane (HFC-32) and 1,2,3,3,-tetrafluoropropene (HFO-1234ze)), dimethyl ether, carbon dioxide (R-744), ammonia (R-717), bis(trifluoromethyl)sulfide, trifluoroiodomethane, and combinations thereof. In certain particular variations, the high energy refrigerant in the working fluid may comprise difluoromethane (HFC-32), ammonia (R-717), carbon dioxide (R-744), and any combinations thereof. In certain aspects, the working fluid comprises a synthetic oil. In certain variations, the lubricant oil may comprise a polyvinyl ether (PVE) oil, a polyalphaolefin (PAO), a polyalkylene glycol (PAG), or an ester-based oil, such as polyol ester (POE) oil. In certain variations, for example, the lubricant oil may comprise a polyol ester (POE) compound formed from a carboxylic acid and a polyol. In certain variations, such a POE may be formed from a carboxylic acid selected from a group consisting of: n-pentanoic acid, 2-methylbutanoic acid, n-hexanoic acid, n-heptanoic acid, 3,3,5-trimethylhexanoic acid, 2-ethylhexanoic acid, n-octanoic acid, n-nonanoic acid, and isononanoic acid, and combinations thereof and a polyol selected from a group consisting of: pentaerythritol, dipentaerythritol, neopentyl glycol, trimethylpropanol, and combinations thereof. For example, one particularly suitable lubricant oil is a polyol ester oil designated 3MAF, which is a reaction product of pentaerythritol (nominally about 78% to 91% and dipentaerythritol (nominally about 9% to 22%)) polyols with carboxylic acids (valeric acid nominally at 29% to 34%, heptanoic acid nominally at 34% to 44%, and 3,5,5-trimethyl hexanoic acid nominally at 22% to 37%).

In yet other variations, the present disclosure provides a method for improving bearing performance for a compressor machine. In certain aspects, the method may comprise providing or incorporating a bearing into a compressor machine. The bearing may be a lead-free bearing comprising copper and molybdenum disulfide (MoS₂). The compressor processes a working fluid comprising a refrigerant and a lubricant oil comprising a sulfur-based additive. In certain aspects, the refrigerant comprises a high energy refrigerant. In other variations, the compressor machine may have a high-side pressure design. The sulfur-based additive comprises 2,5-dimercapto-1,3,4-thiadiazole or a derivative thereof. The sulfur-based additive reacts with the copper in the bearing to enhance lubricity and improve performance of the bearing in the compressor machine. In certain variations, the sulfur-based additive comprises 2,5-bis(n-octyldithio)-1,3,4-thiadiazole and dioctyl disulfide. In certain embodiments, the high energy refrigerant may be selected from a group consisting of: saturated hydrofluorocarbons, difluoromethane (HFC-32), difluoroethane (HFC-152a), fluoroethane (HFC-161), HFC-410A (a mixture of difluoromethane (HFC-32) and pentafluoroethane (HFC-125)), chlorodifluoromethane (HCFC-22), hydrofluoroolefin (HFO) Blend 1 (a mixture of difluoromethane (HFC-32), 1,2,3,3,-tetrafluoropropene (HFO-1234ze), 3,3,3,-trifluoropropene (HFO-1234zf), and difluoroethane (HFC-152a)), hydrofluoroolefin (HFO) Blend 2 (a mixture of difluoromethane (HFC-32) and 3,3,3,-trifluoropropene (HFO-1234zf)), hydrofluoroolefin (HFO) Blend 3 (a mixture of difluoromethane (HFC-32) and 1,2,3,3,-tetrafluoropropene (HFO-1234ze)), dimethyl ether, carbon dioxide (R-744), ammonia (R-717), bis(trifluoromethyl) sulfide, trifluoroiodomethane, and any combinations thereof. In certain particular variations, the high energy refrigerant in the working fluid may comprise difluoromethane (HFC-32), ammonia (R-717), carbon dioxide (R-744), and combinations thereof.

The present technology is particularly useful for high energy refrigerant systems. The present teachings provide a surprising discovery that a combination of bearing material, oil additive, and temperature changes attendant with high energy refrigerants can result in an unexpectedly improved performance of a bearing or wear surface in otherwise harsh operating conditions. Where the bearing is substantially free of lead, the higher temperature refrigerants can aide in formation of the low friction sulfur/copper reaction products. Moreover, the present technology is particularly useful for high-side compressors in certain variations. High-side compressors can be hermetically sealed and have temperature and pressure conditions at or near the discharge gas conditions. Accordingly, various components within a high-side type of compressor can be exposed to extreme conditions and particularly high temperatures. Regardless of whether the present technology is used in conjunction with a high-side, low-side, or other type of compressor (e.g., open drive), it serves to increase the reliability (and usable life) of bearings. Hence, the amount of field repairs can be reduced, which will effectively reduce the probability of refrigerant leaking into the atmosphere during any repairs. The extra lubricity can also help reduce friction and power requirements, which helps to conserve electrical energy during compressor operation.

### Example

40 machined sleeve bearings, including 20 conventional bearings having lead particles and 20 lead-free bearings, in accordance with certain aspects of the present disclosure, are compared via simulated early bearing performance bench tests. The bearings are typical compressor production sleeve bearings composed of a copper-bronze substrate having a polytetrafluoroethylene (PTFE) polymer matrix that has been machined along the polymer matrix surface. The 20 conventional bearings have a PTFE matrix with lead particles, while the 20 lead-free bearings have molybdenum disulfide particles in the PTFE polymer matrix. The test is conducted in the presence of a polyol ester oil containing a sulfur additive (CUVAN® 826) at approximately 0.25% by weight of the oil. The oil is a mixed acid type polyol ester oil (POE) with a viscosity of about 32 cSt at 40°C. The bench tests conducted here are short, but partially simulate and mimic certain realistic bearing conditions, so as to be able to rate the initial relative performance of different bearing types (in this case, leaded versus unleaded/lead-free bearing compositions). However, the bench tests conducted here are not a replacement for full HVAC systems testing, but rather are a supplement to provide an early indication of bearing performance under certain specific test conditions.

The bench tests include running the bearings at normal compressor velocities and loading, but with intentionally limited or no oil flow. Furthermore, no refrigerant is used during testing; only oil. Because a refrigerant is not used, the thermally activated chemical reaction (*e.g.*, with copper and sulfur) described in accordance with various aspects of the present disclosure will only result from and be dependent on the "frictional" heating produced (due to the lack of lubrication imposed during this test). Thus, this test fails to fully account for actual conditions in the compressor system, including failing to provide any heat from the heat-of-compression due to an absence of refrigerant.

The bench test includes measuring the time it takes to cause a specific level of surface distress on each of the bearings. Enough samples are run to gain statistical confidence in the results using Weibull analysis to compare the two populations. It is found that the lead-free bearings in accordance with certain aspects of the present disclosure are approximately 40% improved relative to the conventional leaded bearings (that is, it took about 40% longer for the lead-free bearings to fail as compared to the conventional leaded bearings).

As noted above, this bench test is very short compared to real-life HVAC applications (for example, the bench test is in terms of minutes to failure for each bearing) as compared to real-life applications and tests that typically run for years. Thus, the chemical reaction in accordance with certain aspects of the present disclosure had only a limited timeframe to occur. Moreover, because of the absence of a high energy refrigerant in the bench test, only frictional heat facilitated the chemical reaction. In actual systems, the cumulative (additive) effects of both the heats of compression of the high energy refrigerant and frictional heat from bearing/counter-surface interaction would cause an even higher rate of reaction, so that it is expected that even greater improved bearing performance will occur due to the sulfur additive in such a system.

In various aspects, a compressor, such as a scroll machine, operated in accordance with the present teachings is capable of use for at least 1,000 hours of operation, optionally at least about 1,500 hours of operation, and preferably in certain embodiments, at least about 2,000 hours or longer of compressor machine operation/service processing a high energy refrigerant. In certain aspects, the compressor machine is capable of use for at least 1,000 hours of compressor machine operation with the high energy refrigerant due to the sulfur-based additive reacting with a material comprising copper (*e.g.,* a copper alloy) in the bearing.

In certain aspects, the performance of a compressor that processes a working fluid comprising a high energy refrigerant and a lubricant oil comprising a sulfur-based additive and having a bearing substantially free of lead has loss of coefficient of performance (COP) of less than or equal to about 5% over 1,000 hours of compressor performance; optionally less than or equal to about 4% change in COP over 1,000 hours of compressor performance; optionally less than or equal to about 3% change in COP over 1,000 hours of compressor performance. In certain aspects, a compressor that processes a working fluid comprising a high energy refrigerant and a lubricant oil comprising a sulfur-based additive and having a bearing substantially free of lead has a COP loss of less than or equal to about 5% change in COP over 1,500 hours of compressor performance; optionally less than or equal to about 4% change in COP over 1,500 hours of compressor performance; and in certain aspects, optionally less than or equal to about 3% change in COP over 1,500 hours of compressor performance. In yet other aspects, the compressor has a COP loss of optionally less than or equal to about 5% change in COP over 2,000 hours of compressor performance; optionally less than or equal to about 4% change in COP over 2,000 hours of compressor performance. Thus, in certain aspects, the compressor machine has less than or equal to about 5% loss of coefficient of performance (COP) over 1,000 hours of compressor machine operation with the high energy refrigerant due to the sulfur-based additive reacting with the copper in the bearing.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the claims.

## Claims

1. A method for improving bearing performance for a compressor machine, the method comprising:
providing a bearing substantially free of lead (Pb) comprising a material that comprises copper (Cu) and at least one lubricant particle selected from a group consisting of: molybdenum disulfide (MoS₂), tungsten disulfide (WS₂), zinc sulfide (ZnS), hexagonal boron nitride, polytetrafluoroethylene (PTFE), calcium fluoride (CaF₂), carbon fiber, graphite, graphene, carbon nanotubes, carbon particles, thermoset polyimide, and combinations thereof in the compressor machine, **characterized in that** the compressor machine is configured to process a working fluid comprising a refrigerant and a lubricant oil comprising a sulfur-based additive in the compressor machine,
wherein the sulfur-based additive reacts with the copper in the bearing to enhance lubricity and improve performance of the bearing in the compressor machine.

2. The method of claim 1, wherein the sulfur-based additive is selected from a group consisting of: diaryl sulfides, arylalkyl sulfides, dialkyl sulfides, diaryl disulfides, arylalkyl disulfides, dialkyl disulfides, diaryl polysulfides, arylalkyl polysulfides, dialkyl polysulfides, dithiocarbamates, derivatives of 2-mercaptobenzothiazole, derivatives of 2,5-dimercapto-1,3,4-thiadiazole, and combinations thereof, and
wherein the refrigerant is a high energy refrigerant selected from a group consisting of: saturated hydrofluorocarbons, difluoromethane (HFC-32), difluoroethane (HFC-152a), fluoroethane (HFC-161), HFC-410A (a mixture of difluoromethane (HFC-32) and pentafluoroethane (HFC-125)), chlorodifluoromethane (HCFC-22), hydrofluoroolefin (HFO) Blend 1 (a mixture of difluoromethane (HFC-32), 1,2,3,3,-tetrafluoropropene (HFO-1234ze), 3,3,3,-trifluoropropene (HFO-1234zf), and difluoroethane (HFC-152a)), hydrofluoroolefin (HFO) Blend 2 (a mixture of difluoromethane (HFC-32) and 3,3,3,-trifluoropropene (HFO-1234zf)), hydrofluoroolefin (HFO) Blend 3 (a mixture of difluoromethane (HFC-32) and 1,2,3,3,-tetrafluoropropene (HFO-1234ze)), dimethyl ether, carbon dioxide (R-744), ammonia (R-717), bis(trifluoromethyl)sulfide, trifluoroiodomethane, and combinations thereof.

3. The method of claim 1, wherein the sulfur-based additive comprises 2,5-dimercapto-1,3,4-thiadiazole or a derivative thereof.

4. The method of claim 2, wherein:
the compressor machine has less than or equal to about 5% loss of coefficient of performance (COP) over 1,000 hours of compressor machine operation with the refrigerant due to the sulfur-based additive reacting with the copper in the bearing; or
the compressor machine is capable of use for at least 1,000 hours of compressor machine operation with the refrigerant due to the sulfur-based additive reacting with the copper in the bearing.

5. The method of claim 1, wherein the material that comprises copper (Cu) is a porous bronze material, and the bearing is a lead-free self-lubricating bearing comprising a steel backing layer overlaid with the porous bronze material impregnated with a sliding composite material comprising the at least one lubricant particle, and
(i) the porous bronze material optionally comprises greater than or equal to about 75% by weight to less than or equal to about 95% by weight copper and greater than or equal to about 5% by weight to less than or equal to about 25% by weight tin; or
(ii) the porous bronze material optionally comprises greater than or equal to about 88% by weight to less than or equal to about 90% by weight copper and greater than or equal to about 10% by weight to less than or equal to about 12% by weight tin and the sliding composite material comprises polytetrafluoroethylene (PTFE) resin having molybdenum disulfide (MoS₂) particles distributed therein.

6. The method of claim 1, wherein the lubricant oil comprises a polyol ester (POE) compound formed from a carboxylic acid and a polyol, wherein the carboxylic acid is selected from a group consisting of: n-pentanoic acid, 2-methylbutanoic acid, n-hexanoic acid, n-heptanoic acid, 3,3,5-trimethylhexanoic acid, 2-ethylhexanoic acid, n-octanoic acid, n-nonanoic acid, isononanoic acid, and combinations thereof, and the polyol is selected from a group consisting of: pentaerythritol, dipentaerythritol, neopentyl glycol, trimethylpropanol, and combinations thereof.

7. The method of claim 1, wherein the bearing has a machined surface.

8. The method of claim 1, wherein the sulfur-based additive comprises 2,5-dimercapto-1,3,4-thiadiazole or a derivative thereof, wherein the bearing substantially free of lead (Pb) is a lead-free bearing comprising molybdenum disulfide (MoS₂) particles and a material comprising copper, wherein the sulfur-based additive reacts with the copper (Cu) in the lead-free bearing to enhance lubricity and improve performance of the lead-free bearing in the compressor machine.

9. The method of claim 8, wherein the sulfur-based additive comprises 2,5-bis(n-octyldithio)-1,3,4-thiadiazole and dioctyl disulfide and the refrigerant is a high energy refrigerant selected from a group consisting of: difluoromethane (HFC-32), carbon dioxide (R-744), ammonia (R-717), and combinations thereof.

10. A compressor machine having improved wear resistance comprising:
a compression mechanism configured to process a working fluid comprising a high energy refrigerant and a lubricant oil comprising a sulfur-based additive; and
a bearing comprising a material comprising copper (Cu) and at least one lubricant particle selected from a group consisting of: molybdenum disulfide (MoS₂), zinc sulfide (ZnS), tungsten disulfide (WS₂), calcium fluoride (CaF₂), hexagonal boron nitride, polytetrafluoroethylene (PTFE), carbon fiber, carbon particles, graphite, graphene, carbon nanotubes, thermoset polyimide, and combinations thereof, wherein the bearing is substantially free of lead so that the copper is capable of reacting with the sulfur-based additive to improve lubricity of the bearing.

11. The compressor machine of claim 10, wherein the sulfur-based additive is selected from a group consisting of: diaryl sulfides, arylalkyl sulfides, dialkyl sulfides, diaryl disulfides, arylalkyl disulfides, dialkyl disulfides, diaryl polysulfides, arylalkyl polysulfides, dialkyl polysulfides, dithiocarbamates, derivatives of 2-mercaptobenzothiazole, derivatives of 2,5-dimercapto-1,3,4-thiadiazole, and combinations thereof, and
wherein the high energy refrigerant is selected from a group consisting of: saturated hydrofluorocarbons, difluoromethane (HFC-32), difluoroethane (HFC-152a), fluoroethane (HFC-161), HFC-410A (a mixture of difluoromethane (HFC-32) and pentafluoroethane (HFC-125)), chlorodifluoromethane (HCFC-22), hydrofluoroolefin (HFO) Blend 1 (a mixture of difluoromethane (HFC-32), 1,2,3,3,-tetrafluoropropene (HFO-1234ze), 3,3,3,-trifluoropropene (HFO-1234zf), and difluoroethane (HFC-152a)), hydrofluoroolefin (HFO) Blend 2 (a mixture of difluoromethane (HFC-32) and 3,3,3,-trifluoropropene (HFO-1234zf)), hydrofluoroolefin (HFO) Blend 3 (a mixture of difluoromethane (HFC-32) and 1,2,3,3,-tetrafluoropropene (HFO-1234ze)), dimethyl ether, carbon dioxide (R-744), ammonia (R-717), bis(trifluoromethyl)sulfide, trifluoroiodomethane, and combinations thereof.

12. The compressor machine of claim 10,
wherein the lubricant oil comprises a polyol ester (POE) compound formed from a carboxylic acid and a polyol,
wherein the carboxylic acid is selected from a group consisting of: n-pentanoic acid, 2-methylbutanoic acid, n-hexanoic acid, n-heptanoic acid, 3,3,5-trimethylhexanoic acid, 2-ethylhexanoic acid, n-octanoic acid, n-nonanoic acid, isononanoic acid, and combinations thereof, and
wherein the polyol is selected from a group consisting of: pentaerythritol, dipentaerythritol, neopentyl glycol, trimethylpropanol, and combinations thereof.

13. The compressor machine of claim 10, wherein:
the compressor machine has less than or equal to about 5% loss of coefficient of performance (COP) over 1,000 hours of compressor machine operation; or
the compressor machine is capable of use for at least 1,000 hours of compressor machine operation.

14. The compressor machine of claim 10, wherein the material comprising copper (Cu) is a porous bronze material, the bearing is a lead-free self-lubricating bearing comprising a steel backing layer overlaid with the porous bronze material and a sliding composite material comprising the at least one lubricant particle, and
(i) the porous bronze material optionally comprises greater than or equal to about 75% by weight to less than or equal to about 95% by weight copper and greater than or equal to about 5% by weight to less than or equal to about 25% by weight tin; or
(ii) the porous bronze material optionally comprises greater than or equal to about 88% by weight to less than or equal to about 90% by weight copper and greater than or equal to about 10% by weight to less than or equal to about 12% by weight tin and the sliding composite material comprises polytetrafluoroethylene (PTFE) resin having molybdenum disulfide (MoS₂) particles distributed therein.

15. The compressor machine of claim 10, wherein the bearing has a machined surface.

## Patentansprüche

1. Verfahren zur Verbesserung der Lagerleistung für eine Kompressormaschine, das Verfahren umfassend:
Bereitstellen eines im Wesentlichen bleifreien (Pb) Lagers, das ein Material umfasst, das Kupfer (Cu) und mindestens ein Schmiermittelpartikel umfasst, ausgewählt aus einer Gruppe bestehend aus: Molybdändisulfid (MoS₂), Wolframdisulfid (WS₂), Zinksulfid (ZnS), hexagonalem Bornitrid, Polytetrafluorethylen (PTFE), Calciumfluorid (CaF₂), Kohlenstofffaser, Graphit, Graphen, Kohlenstoffnanoröhren, Kohlenstoffpartikel, duroplastischem Polyimid und Kombinationen davon in der Kompressormaschine,
**dadurch gekennzeichnet, dass**
die Kompressormaschine konfiguriert, um ein Arbeitsfluid, das ein Kältemittel und ein Schmiermittelöl umfasst, das ein Additiv auf Schwefelbasis umfasst, in der Kompressormaschine zu verarbeiten,
wobei das Additiv auf Schwefelbasis mit dem Kupfer im Lager reagiert, um die Schmierfähigkeit zu verbessern und die Leistung des Lagers in der Kompressormaschine zu verbessern.

2. Verfahren nach Anspruch 1, wobei das Additiv auf Schwefelbasis ausgewählt ist aus einer Gruppe bestehend aus: Diarylsulfiden, Arylalkylsulfiden, Dialkylsulfiden, Diaryldisulfiden, Arylalkyldisulfiden, Dialkyldisulfiden, Diarylpolysulfiden, Arylalkylpolysulfiden, Dialkylpolysulfiden, Dithiocarbamaten, Derivaten von 2-Mercaptobenzothiazol, Derivaten von 2,5-Dimercapto-1,3,4-thiadiazol und Kombinationen davon, und
wobei das Kältemittel ein hochenergetisches Kältemittel ist, ausgewählt aus einer Gruppe bestehend aus: gesättigten Fluorkohlenwasserstoffen, Difluormethan (HFC-32), Difluorethan (HFC-152a), Fluorethan (HFC-161), HFC-410A (eine Mischung aus Difluormethan (HFC- 32) und Pentafluorethan (HFC-125)), Chlordifluormethan (HFC-22), Hydrofluorolefin (HFO) Mischung 1 (eine Mischung aus Difluormethan (HFC-32), 1,2,3,3-Tetrafluorpropen (HFO-1234ze), 3,3,3-Trifluorpropen (HFO-1234zf), und Difluorethan (HFC-152a)), Hydrofluorolefin (HFO) Mischung 2 (eine Mischung aus Difluormethan (HFC-32) und 3,3,3-Trifluorpropen (HFO-1234zf), Hydrofluorolefin (HFO) Mischung 3 (eine Mischung aus Difluormethan (HFC-32) und 1,2,3,3-Tetrafluorpropen (HFO-1234ze)), Dimethylether, Kohlendioxid (R-744), Ammoniak (R-717), Bis(trifluormethyl)sulfid, Trifluoriodmethan und Kombinationen davon.

3. Verfahren nach Anspruch 1, wobei das Additiv auf Schwefelbasis 2,5-Dimercapto-1,3,4-thiadiazol oder ein Derivat davon umfasst.

4. Verfahren nach Anspruch 2, wobei:
die Kompressormaschine einen Leistungskoeffizientenverlust (COP) von weniger als oder gleich ungefähr 5 % über 1.000 Betriebsstunden der Kompressormaschine mit dem Kältemittel aufweist, da das Additiv auf Schwefelbasis mit dem Kupfer im Lager reagiert; oder
die Kompressormaschine zur Verwendung für mindestens 1.000 Stunden des Kompressormaschinenbetriebs mit dem Kältemittel ausgelegt ist, da das Additiv auf Schwefelbasis mit dem Kupfer im Lager reagiert.

5. Verfahren nach Anspruch 1, wobei das Material, das Kupfer (Cu) umfasst, ein poröses Bronzematerial ist und das Lager ein bleifreies selbstschmierendes Lager ist, das eine Stahlrückschicht umfasst, die mit dem porösen Bronzematerial überzogen ist, das mit einem Gleitverbundmaterial imprägniert ist umfassend das mindestens eine Schmiermittelpartikel, und
(i) das poröse Bronzematerial optional mehr als oder gleich ungefähr 75 Gew.-% bis weniger als oder gleich ungefähr 95 Gew.-% Kupfer und mehr als oder gleich ungefähr 5 Gew.-% bis weniger als oder gleich ungefähr 25 Gew.-% Zinn umfasst; oder
(ii) das poröse Bronzematerial optional mehr als oder gleich ungefähr 88 Gew.-% bis weniger als oder gleich ungefähr 90 Gew.-% Kupfer und mehr als oder gleich ungefähr 10 Gew.-% bis weniger als oder gleich ungefähr 12 Gew.-% Zinn umfasst und das Gleitverbundmaterial Polytetrafluorethylen (PTFE)-Harz mit darin verteilten Molybdändisulfid (MoS₂)-Partikeln umfasst.

6. Verfahren nach Anspruch 1, wobei das Schmiermittelöl eine Polyolester (POE) -Verbindung umfasst, die aus einer Carbonsäure und einem Polyol gebildet ist, wobei die Carbonsäure ausgewählt ist aus einer Gruppe bestehend aus: n-Pentansäure, 2-Methylbutansäure, n -Hexansäure, n-Heptansäure, 3,3,5-Trimethylhexansäure, 2-Ethylhexansäure, n-Octansäure, n-Nonansäure, Isononansäure und Kombinationen davon, und das Polyol ausgewählt ist aus einer Gruppe bestehend aus: Pentaerythrit, Dipentaerythrit, Neopentylglykol, Trimethylpropanol und Kombinationen davon.

7. Verfahren nach Anspruch 1, wobei das Lager eine bearbeitete Oberfläche hat.

8. Verfahren nach Anspruch 1, wobei das Additiv auf Schwefelbasis 2,5-Dimercapto-1,3,4-thiadiazol oder ein Derivat davon umfasst, wobei das im Wesentlichen bleifreie (Pb) Lager ein bleifreies Lager ist, das Molybdändisulfid (MoS₂) -Partikel umfasst und ein Material, das Kupfer umfasst, wobei das Additiv auf Schwefelbasis mit dem Kupfer (Cu) im bleifreien Lager reagiert, um die Schmierfähigkeit zu verstärken und die Leistung des bleifreien Lagers in der Kompressormaschine zu verbessern.

9. Verfahren nach Anspruch 8, wobei das Additiv auf Schwefelbasis 2,5-Bis(n-octyldithio)-1,3,4-thiadiazol und Dioctyldisulfid umfasst und das Kältemittel ein hochenergetisches Kältemittel ist, ausgewählt aus einer Gruppe bestehend aus: Difluormethan (HFC-32), Kohlendioxid (R-744), Ammoniak (R-717) und Kombinationen davon.

10. Kompressormaschine mit verbesserter Verschleißfestigkeit umfassend:
einen Kompressionsmechanismus, der konfiguriert ist, um ein Arbeitsfluid zu verarbeiten, das ein hochenergetisches Kältemittel und ein Schmiermittelöl umfasst, das ein Additiv auf Schwefelbasis umfasst; und
ein Lager, umfassend ein Material, umfassend Kupfer (Cu) und mindestens ein Schmiermittelpartikel, ausgewählt aus einer Gruppe bestehend aus: Molybdändisulfid (MoS₂), Zinksulfid (ZnS), Wolframdisulfid (WS₂), Calciumfluorid (CaF₂), hexagonalem Bornitrid, Polytetrafluorethylen (PTFE), Kohlenstofffasern, Kohlenstoffpartikeln, Graphit, Graphen, Kohlenstoffnanoröhren, duroplastisches Polyimid und Kombinationen davon, wobei das Lager im wesentlichen bleifrei ist, so dass das Kupfer mit dem Additiv auf Schwefelbasis reagieren kann, um die Schmierfähigkeit des Lagers zu verbessern.

11. Kompressormaschine Anspruch 10, wobei das Additiv auf Schwefelbasis ausgewählt ist aus einer Gruppe bestehend aus: Diarylsulfiden, Arylalkylsulfiden, Dialkylsulfiden, Diaryldisulfiden, Arylalkyldisulfiden, Dialkyldisulfiden, Diarylpolysulfiden, Arylalkylpolysulfiden, Dialkylpolysulfiden, Dithiocarbamaten, Derivaten von 2-Mercaptobenzothiazol, Derivaten von 2,5-Dimercapto-1,3,4-thiadiazol und Kombinationen davon, und
wobei das hochenergetische Kältemittel ausgewählt ist aus einer Gruppe bestehend aus: gesättigten Fluorkohlenwasserstoffen, Difluormethan (HFC-32), Difluorethan (HFC-152a), Fluorethan (HFC-161), HFC-410A (eine Mischung aus Difluormethan (HFC- 32) und Pentafluorethan (HFC-125)), Chlordifluormethan (HFC-22), Hydrofluorolefin (HFO) Mischung 1 (eine Mischung aus Difluormethan (HFC-32), 1,2,3,3-Tetrafluorpropen (HFO-1234ze), 3,3,3-Trifluorpropen (HFO-1234zf), und Difluorethan (HFC-152a)), Hydrofluorolefin (HFO) Mischung 2 (eine Mischung aus Difluormethan (HFC-32) und 3,3,3-Trifluorpropen (HFO-1234zf), Hydrofluorolefin (HFO) Mischung 3 (eine Mischung aus Difluormethan (HFC-32) und 1,2,3,3-Tetrafluorpropen (HFO-1234ze)), Dimethylether, Kohlendioxid (R-744), Ammoniak (R -717), Bis(trifluormethyl)sulfid, Trifluoriodmethan und Kombinationen davon.

12. Kompressormaschine nach Anspruch 10,
wobei das Schmiermittelöl eine aus einer Carbonsäure und einem Polyol gebildete Polyolester (POE) -Verbindung umfasst,
wobei die Carbonsäure ausgewählt ist aus einer Gruppe bestehend aus: n-Pentansäure, 2-Methylbutansäure, n-Hexansäure, n-Heptansäure, 3,3,5-Trimethylhexansäure, 2-Ethylhexansäure, n-Octansäure n-Nonansäure, Isononansäure und Kombinationen davon, und
wobei das Polyol ausgewählt ist aus einer Gruppe bestehend aus: Pentaerythrit, Dipentaerythrit, Neopentylglykol, Trimethylpropanol und Kombinationen davon.

13. Kompressormaschine nach Anspruch 10, wobei:
die Kompressormaschine einen Leistungskoeffizientenverlust (COP) von weniger als oder gleich ungefähr 5 % über 1.000 Betriebsstunden der Kompressormaschine hat; oder
die Kompressormaschine zur Verwendung für mindestens 1.000 Stunden des Kompressormaschinenbetriebs ausgelegt ist.

14. Kompressormaschine nach Anspruch 10, wobei das Material, das Kupfer (Cu) umfasst, ein poröses Bronzematerial ist, das Lager ein bleifreies selbstschmierendes Lager ist, das eine Stahlrückschicht umfasst, die mit dem porösen Bronzematerial überzogen ist, und ein Gleitverbundmaterial umfassend das mindestens eine Schmiermittelpartikel, und
(i) das poröse Bronzematerial optional mehr als oder gleich ungefähr 75 Gew.-% bis weniger als oder gleich ungefähr 95 Gew.-% Kupfer und mehr als oder gleich ungefähr 5 Gew.-% bis weniger als oder gleich ungefähr 25 Gew.-% Zinn umfasst; oder
(ii) das poröse Bronzematerial optional mehr als oder gleich ungefähr 88 Gew.-% bis weniger als oder gleich ungefähr 90 Gew.-% Kupfer und mehr als oder gleich ungefähr 10 Gew.-% bis weniger als oder gleich ungefähr 12 Gew.-% Zinn umfasst und das Gleitverbundmaterial Polytetrafluorethylen (PTFE)-Harz mit darin verteilten Molybdändisulfid (MoS₂)-Partikeln umfasst.

15. Kompressormaschine nach Anspruch 10, wobei das Lager eine bearbeitete Oberfläche aufweist.

## Revendications

1. Procédé pour améliorer les performances des paliers d'une machine à compresseur, le procédé comprenant :
la fourniture d'un palier sensiblement exempt de plomb (Pb) comprenant un matériau qui comprend du cuivre (Cu) et au moins une particule de lubrifiant choisie dans un groupe constitué de : bisulfure de molybdène (MoS₂), disulfure de tungstène (WS₂), sulfure de zinc (ZnS), nitrure de bore hexagonal, polytétrafluoroéthylène (PTFE), fluorure de calcium (CaF₂), fibre de carbone, graphite, graphène, nanotubes de carbone, particules de carbone, polyimide thermodurci et leurs combinaisons dans la machine à compresseur,
**caractérisé en ce que**
la machine à compresseur est configurée pour traiter un fluide de travail comprenant un réfrigérant et une huile lubrifiante comprenant un additif à base de soufre dans la machine à compresseur,
dans lequel l'additif à base de soufre réagit avec le cuivre dans le palier pour améliorer le pouvoir lubrifiant et améliorer les performances du palier dans la machine de compresseur.

2. Procédé selon la revendication 1, dans lequel l'additif à base de soufre est choisi dans un groupe constitué de: sulfures de diaryle, sulfures d'arylalkyle, sulfures de dialkyle, disulfures de diaryle, disulfures d'arylalkyle, disulfures de dialkyle, polysulfures de diaryle, polysulfures d'arylalkyle, polysulfures de dialkyle, dithiocarbamates , dérivés du 2-mercaptobenzothiazole, dérivés du 2,5-dimercapto-1,3,4-thiadiazole et leurs combinaisons, et
dans lequel le réfrigérant est un réfrigérant à haute énergie choisi dans un groupe constitué de: hydrofluorocarbures saturés, difluorométhane (HFC-32), difluoroéthane (HFC-152a), fluoroéthane (HFC-161), HFC-410A (un mélange de difluorométhane (HFC-32) et pentafluoroéthane (HFC-125), chlorodifluorométhane (HCFC-22), hydrofluorooléfine (HFO) mélange 1 (mélange de difluorométhane (HFC-32, 1,2,3,3,-tétrafluoropropène (HFO-1234ze), 3,3,3, -trifluoropropène (HFO-1234zf) et difluoroéthane (HFC-152a), mélange 2 d'hydrofluorooléfine (HFO) (mélange de difluorométhane (HFC-32) et de 3,3,3, -trifluororopropène (HFO-1234z0), mélange 3 d'hydrofluorooléfines (HFO) (mélange de difluorométhane (HFC-32) et de 1,2,3,3, -tétrafluoropropène (HFO-1234ze), d'éther diméthylique, de dioxyde de carbone (R-744), d'ammoniac (R-717), bis (trifluorométhyl) sulfure, trifluoroiodométhane et leurs combinaisons.

3. Procédé selon la revendication 1, dans lequel l'additif à base de soufre comprend le 2,5-dimercapto-1,3,4-thiadiazole ou un dérivé de celui-ci.

4. Procédé selon la revendication 2, dans lequel :
la machine à compresseur a une perte de coefficient de performance (COP) inférieure ou égale à environ 5% sur 1000 heures de fonctionnement de la machine à compresseur avec le réfrigérant en raison de l'additif à base de soufre réagissant avec le cuivre dans le palier ; ou
la machine à compresseur est capable de fonctionner pendant au moins 1 000 heures avec le réfrigérant en raison de l'additif à base de soufre réagissant avec le cuivre dans le palier.

5. Procédé selon la revendication 1, dans lequel le matériau qui comprend du cuivre (Cu) est un matériau en bronze poreux, et le palier est un palier autolubrifiant sans plomb comprenant une couche de support en acier recouverte du matériau en bronze poreux imprégné d'un matériau composite coulissant comprenant l'au moins une particule lubrifiante, et
(i) le matériau poreux en bronze comprend éventuellement un poids supérieur ou égal à environ 75% en poids et inférieur ou égal à environ 95% en poids de cuivre et supérieur ou égal à environ 5% en poids et inférieur ou égal à environ 25 % en poids d'étain ; ou
(ii) le matériau poreux en bronze comprend éventuellement un poids supérieur ou égal à environ 88% en poids et inférieur ou égal à environ 90% en poids de cuivre et supérieur ou égal à environ 10% en poids et inférieur ou égal à environ 12 % en poids d'étain et le matériau composite glissant comprend une résine de polytétrafluoroéthylène (PTFE) contenant des particules de bisulfure de molybdène (MoS₂) qui y sont réparties.

6. Procédé selon la revendication 1, dans lequel l'huile lubrifiante comprend un composé ester de polyol (POE) formé à partir d'un acide carboxylique et d'un polyol, dans lequel l'acide carboxylique est choisi dans un groupe comprenant: l'acide n-pentanoïque, l'acide 2-méthylbutanoïque , l'acide n-hexanoïque, l'acide n-heptanoïque, l'acide 3,3,5-triméthylhexanoïque, l'acide 2-éthylhexanoïque, l'acide n-octanoïque, l'acide n-nonanoïque, l'acide isononanoïque et leurs combinaisons, et le polyol est choisi dans un groupe consistant de pentaérythritol, dipentaérythritol, néopentyl glycol, triméthylpropanol et leurs combinaisons.

7. Procédé selon la revendication 1, dans lequel le palier a une surface usinée.

8. Procédé selon la revendication 1, dans lequel l'additif à base de soufre comprend le 2,5-dimercapto-1,3,4-thiadiazole ou un dérivé de celui-ci, dans lequel le palier sensiblement exempt de plomb (Pb) est un palier sans plomb comprenant des particules de bisulfure de molybdène (MoS₂) et un matériau comprenant du cuivre, dans lesquels l'additif à base de soufre réagit avec le cuivre (Cu) dans le palier sans plomb pour améliorer la lubrification et améliorer les performances du palier sans plomb dans la machine de compresseur.

9. Procédé selon la revendication 8, dans lequel l'additif à base de soufre comprend le 2,5-bis (n-octyldithio) -1,3,4-thiadiazole et le disulfure de dioctyle et le réfrigérant est un réfrigérant à haute énergie choisi dans un groupe constitué de : difluorométhane (HFC-32), dioxyde de carbone (R-744), ammoniac (R-717) et leurs combinaisons.

10. Machine à compresseur ayant une résistance à l'usure améliorée comprenant:
un mécanisme de compression configuré pour traiter un fluide de travail comprenant un réfrigérant à haute énergie et une huile lubrifiante comprenant un additif à base de soufre ; et
un palier comprenant un matériau comprenant du cuivre (Cu) et au moins une particule de lubrifiant choisie dans un groupe constitué de : bisulfure de molybdène (MoS₂), sulfure de zinc (ZnS), disulfure de tungstène (WS₂), fluorure de calcium (CaF₂), nitrure de bore hexagonal, polytétrafluoroéthylène (PTFE), fibre de carbone, particules de carbone, graphite, graphène, nanotubes de carbone, polyimide thermodurci et leurs combinaisons, dans laquelle le palier est sensiblement exempt de plomb de sorte que le cuivre est capable de réagir avec l'additif à base de soufre pour améliorer la lubrification du palier.

11. Machine à compresseur selon la revendication 10, dans laquelle l'additif à base de soufre est choisi dans un groupe constitué de: sulfures de diaryle, sulfures d'arylalkyle, sulfures de dialkyle, disulfures de diaryle, disulfures d'arylalkyle, disulfures de dialkyle, polysulfures de diaryle, polysulfures d'arylalkyle, polysulfures de dialkyle, les dithiocarbamates, les dérivés du 2-mercaptobenzothiazole, les dérivés du 2,5-dimercapto-1,3,4-thiadiazole et leurs combinaisons, et
dans laquelle le réfrigérant à haute énergie est choisi dans un groupe constitué de: hydrofluorocarbures saturés, difluorométhane (HFC-32), difluoroéthane (HFC-152a), fluoroéthane (HFC-161), HFC-410A (un mélange de difluorométhane (HFC-32) et pentafluoroéthane (HFC-125), chlorodifluorométhane (HCFC-22), hydrofluorooléfine (HFO) mélange 1 (mélange de difluorométhane (HFC-32), 1,2,3,3, -tétrafluoropropène (HFO-1234ze), 3,3,3, -trifluoropropène (HFO-1234zf) et difluoroéthane (HFC-152a), hydrofluorooléfine (HFO) mélange 2 (mélange de difluorométhane (HFC-32) et 3,3,3, - trifluororopropène (HF0-1234z0), hydrofluorooléfine (HFO) mélange 3 (mélange de difluorométhane (HFC-32) et de 1,2,3,3, -tétrafluoropropène (HFO-1234ze)), éther diméthylique, dioxyde de carbone (R-744), ammoniac (R-717), bis (trifluorométhyl) sulfure, trifluoroiodométhane et leurs combinaisons.

12. Machine à compresseur selon la revendication 10,
dans laquelle l'huile lubrifiante comprend un composé polyol ester (POE) formé à partir d'un acide carboxylique et d'un polyol,
dans laquelle l'acide carboxylique est choisi dans un groupe constitué de: l'acide n-pentanoïque, l'acide 2-méthylbutanoïque, l'acide n-hexanoïque, l'acide n-heptanoïque, l'acide 3,3,5-triméthylhexanoïque, l'acide 2-éthylhexanoïque, l'acide n-octanoïque , l'acide n-nonanoïque, l'acide isononanoïque et leurs combinaisons, et
dans laquelle le polyol est choisi dans un groupe constitué de: pentaérythritol, dipentaérythritol, néopentyl glycol, triméthylpropanol et leurs combinaisons.

13. Machine à compresseur selon la revendication 10, dans laquelle:
la machine à compresseur présente une perte de coefficient de performance (COP) inférieure ou égale à environ 5% sur 1 000 heures de fonctionnement de la machine à compresseur ; ou
la machine à compresseur peut fonctionner pendant au moins 1 000 heures de fonctionnement.

14. Machine à compresseur selon la revendication 10, dans laquelle le matériau comprenant du cuivre (Cu) est un matériau en bronze poreux, le palier est un palier autolubrifiant sans plomb comprenant une couche de support en acier recouverte du matériau en bronze poreux et un matériau composite coulissant comprenant l'au moins une particule lubrifiante, et
(i) le matériau poreux en bronze comprend éventuellement un poids supérieur ou égal à environ 75% en poids et inférieur ou égal à environ 95% en poids de cuivre et supérieur ou égal à environ 5% en poids et inférieur ou égal à environ 25% en poids d'étain ; ou
(ii) le matériau poreux en bronze comprend éventuellement un poids supérieur ou égal à environ 88% en poids et inférieur ou égal à environ 90% en poids de cuivre et supérieur ou égal à environ 10% en poids et inférieur ou égal à environ 12% en poids d'étain et le matériau composite coulissant comprend une résine de polytétrafluoroéthylène (PTFE) contenant des particules de bisulfure de molybdène (MoS₂) qui y sont réparties.

15. Machine à compresseur selon la revendication 10, dans laquelle le palier a une surface usinée.
